# EUROPEAN PATENT SPECIFICATION

(11) **EP 4 404 361 B1**
(45) Date of publication and mention of the grant of the patent: **02.09.2026**
(21) Application number: 23843356.9
(22) Date of filing: 19.07.2023
(51) Int. Cl.: H01M 50/325, H01M 50/209, H01M 50/342, H01M 50/375, H01M 50/502, H01M 50/211, H01M 50/105

(54) **BATTERY PACK AND DEVICE INCLUDING SAME**
BATTERIEPACK UND VORRICHTUNG DAMIT
BLOC-BATTERIE ET DISPOSITIF LE COMPRENANT

(30) Priority: 20.07.2022 KR 20220089845; 20.07.2022 KR 20220089846; 13.07.2023 KR 20230091053
(43) Date of publication of application: 24.07.2024
(73) Proprietor: LG Energy Solution, Ltd., Seoul 07335 (KR)
(72) Inventor: PARK, Jin Yong, Daejeon 34122 (KR); KIM, Seung Joon, Daejeon 34122 (KR); KWON, Wooyong, Daejeon 34122 (KR); KIM, Insoo, Daejeon 34122 (KR); SHIN, Song Ju, Daejeon 34122 (KR); CHI, Ho June, Daejeon 34122 (KR); JUNG, Seyun, Daejeon 34122 (KR); LEE, Myungwoo, Daejeon 34122 (KR)
(74) Representative: Plasseraud IP
(86) International application number: PCT/KR2023/010379
(87) International publication number: WO 2024/019510

(56) References cited:
- EP-A1- 3 444 865
- JP-A- 2012 015 121
- KR-A- 20210 077 278
- KR-A- 20220 016 502
- KR-A- 20220 021 143
- KR-B1- 102 266 389
- US-A1- 2013 095 356

## Description

### [TECHNICAL FIELD]

The present disclosure relates to a battery pack and a device including the same, and more particularly, a battery pack with enhanced safety, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

Such a lithium secondary battery comprises an electrode assembly in which a cathode plate and an anode plate, each being coated with the cathode active material and the anode active material, are arranged with a separator being interposed between them, and an exterior cladding material, i.e., a battery case, that seals and houses the electrode assembly together with the electrolyte.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

Recently, battery packs have been widely used for driving or energy storage in middle or large-sized devices such as electric vehicles or energy storage systems. A conventional battery pack includes one or more battery modules inside a pack case and a control unit such as a BMS (battery management system) that controls the charging and discharging of a battery pack. Here, the battery module is configured to include a large number of battery cells inside a module case. That is, in the case of a conventional battery pack, a large number of battery cells (secondary batteries) are housed inside a module case to configure each battery module, and one or more of such battery modules are housed inside a pack case to configure a battery pack.

In particular, a pouch-type battery has advantages in various aspects, such as light weight and small dead space during stacking, but has problems that it is vulnerable to external impact, and the assembly property is slightly reduced. Therefore, it is common to manufacture a battery pack by first modularizing a large number of cells and then housing them in a pack case. As a representative example, a conventional battery pack is configured by first housing a large number of battery cells inside a module case to configure a battery module, and then housing one or more of such battery modules inside the pack case. Moreover, a conventional battery module often stacks a large number of battery cells by using various components, such as stacking frames made of plastic material (also called cartridges), both end plates in the cell stacking direction, and fastening members such as bolts as disclosed in the following prior art literature (Korean Unexamined Patent Publication No. 10-2015-0044599, US 2013/095356 A1 or EP 3 444 865 A1), and the like. And, the stack formed in this way is often housed in the inside of a module case again to be modularized. US 2013/095356 A1 discloses the preamble of independent claim 1.

However, such a conventional battery packs may be disadvantageous in terms of energy density. Typically, in the process of housing a large number of battery cells in a module case and modulating them, due to various components such as module cases and stacking frames, the volume of the battery pack may unnecessarily increase or the space occupied by the battery cells may decrease. Moreover, in addition to the space occupied by the components themselves such as the module case and the stacking frame, the housing space for the battery cells can be reduced in order to ensure assembly tolerances for such components. Therefore, conventional battery packs may have limitations in increasing energy density.

Further, conventional battery packs may be disadvantageous in terms of the assembly property. In particular, in order to manufacture a battery pack, it passes through a process of first modularizing a large number of battery cells to configure a battery module, and then housing the battery module in a pack case, which causes a problem that the manufacturing process of the battery pack becomes complicated. Moreover, as disclosed in the above prior art literature, the process and structure of forming a cell stack using stacking frames, bolts, plates, and the like may be very complicated.

Further, in the case of a conventional battery pack, the module case is housed inside the pack case, and the battery cells are housed inside the module case, which also causes a problem that it is difficult to secure excellent cooling performance. In particular, if the heat of the battery cells housed in the module case is discharged to the outside of the pack case through the module case, the cooling efficiency may decrease, and the cooling structure may also become complicated.

In addition, gas venting inside the battery cells may occur due to heat generated from the battery cells. At this time, if a structure for gas venting is not provided, there is a problem that not only gas is vented from battery cells without a certain directionality, increasing the possibility of damage to adjacent battery cells, but also the safety of the battery pack cannot be ensured due to the modularized battery cells and the gas venting released to the outside of the battery pack.

### [Prior Art Literature]

(Patent Literature 1) Korean Unexamined Patent Publication No. 10-2015-0044599 (published on April 27, 2015)

### [DETAILED DESCRIPTION OF THE INVENTION]

### [Technical Problem]

It is an object of the present disclosure to provide a battery pack having improved durability and safety by providing a venting structure for the gas inside the battery cell, and a device including the same.

However, technical subjects of the present disclosure are not limited to the foregoing technical subjects, and any other technical subjects not mentioned will be clearly understood by a skilled person in the art from the following description.

### [Technical Solution]

The present disclosure provides a battery pack as defined by independent claim 1 and a device as defined by independent claim 13. Preferred embodiments are defined in the appended dependent claims. The battery pack comprising: a plurality of battery cells stacked in one direction; a pack case that houses the battery cells in an inner space; a cell cover that at least partially surrounds at least a part of the plurality of battery cells in the inner space of the pack case; and a rupturable sheet formed between an upper portion of the cell cover and the battery cell.

The rupturable sheet includes a plurality of rupturable layers, and a rupture guide member formed between the plurality of rupturable layers.

The cell cover may include a plurality of holes formed while passing through an upper portion of the cell cover, and the rupturable sheet may include a plurality of venting portions formed in one region of the rupturable sheet corresponding to the hole.

The venting portion may be formed by a plurality of venting holes that are formed in one region of the rupturable sheet corresponding to the hole in the cell cover.

The shape of the venting hole may be the same as or smaller than the shape of the cell cover.

In another embodiment of the present disclosure, the venting portion may include a rupture portion including at least three corners, and a connecting portion that is one corner connected to the rupturable sheet.

The rupture portion may be formed along the longitudinal direction of the rupturable sheet, and the connecting portion may be formed to extend along the widthwise direction of the rupturable sheet.

The battery pack may further comprise a first end plate and a second end plate, respectively covering the front side and the rear side of the cell cover, wherein the rupture portion may be located close to the first end plate, and the connecting portion may be located close to the second end plate.

The plurality of cell units including the plurality of battery cells and the cell cover are mounted in the pack case facing each other, and the rupture portions provided in the plurality of cell units facing each other may be disposed to face in opposite directions.

The venting portion according to one embodiment of the present disclosure may be formed by rupturing the plurality of rupturable layers caused by expansion of the rupture guide member.

The plurality of rupturable layers include a first rupturable layer and a second rupturable layer, the first rupturable layer may be positioned opposite to one surface of the second rupturable layer, and the other surface of the second rupturable layer may be positioned opposite to the battery cell.

The first rupturable layer and the second rupturable layer may have a stacked structure.

The rupture guide member is configured to expand at a certain temperature or higher to rupture and cut the plurality of rupturable layers.

The rupture guide member may include a shape memory alloy.

According to another embodiment of the present disclosure, there is provided a device comprising the above-mentioned battery pack.

### [Advantageous Effects]

According to embodiments of the present disclosure, a large number of battery cells can be stably housed in the pack case without a configuration of a stacking frame such as a plastic cartridge or a separate module case. Moreover, according to one aspect of the present disclosure, a battery cell having a ductile material case can be easily formed into a robust configuration, thereby easily realizing a configuration that is directly stacked inside the pack case.

In particular, according to one embodiment of the present disclosure, it is possible to easily realize a configuration in which a large number of battery cells are stacked side by side in a horizontal direction in a state in which a large number of battery cells are erected in a vertical direction.

According to one aspect of the present disclosure, it is possible to improve the energy density of a battery pack.

Moreover, according to one embodiment of the present disclosure, since the battery cells are directly housed in the pack case without being modularized, a module case or the like of the module is not required. Therefore, the space occupied by such a module case can be reduced, so that more battery cells can be disposed inside the pack case. Therefore, it is effective in further improving the energy density of the battery pack.

Further, according to one aspect of the present disclosure, it is possible to improve the assembly property of the battery pack. In particular, according to one embodiment of the present disclosure, a step of housing battery cells in a module case to prepare a battery module, a step of housing one or more battery modules thus prepared into a pack case, and the like, may not be performed. Therefore, the manufacturing process can be simplified and the manufacturing time can be reduced.

Further, according to one aspect of the present disclosure, a configuration that changes the number of battery cells covered by the cell cover can be easily realized. In particular, according to one embodiment of the present disclosure, by changing the width of the cell cover, the number of unit cells housed by the cell cover can be easily changed. Therefore, in this case, it is possible to easily make changes to the capacity or output by one cell cover.

Further, according to one embodiment of the present disclosure, for each cell unit, it is possible to easily realize a configuration in which a busbar or a terminal of each unit is located on the side surface, upper portion, lower portion, or the like of each cell cover.

Further, according to one embodiment of the present disclosure, in the process of housing the ductile battery cell inside the pack case, the cell cover may be held without directly holding the battery cell. Therefore, a process of handling the battery cell can be performed more easily and safely. Furthermore, in this case, it is possible to prevent the battery cell from being damaged or broken during the process of handling battery cells, such as housing the battery cells inside the pack case.

Further, according to one aspect of the present disclosure, it is possible to improve the safety of the battery pack.

In particular, according to one embodiment of the present disclosure, gas discharged from each battery cell can be smoothly discharged to the outside. Furthermore, according to an embodiment of the present disclosure, it is possible to control the discharge direction of gas or flame discharged from the battery cell. Therefore, it is possible to effectively prevent thermal runaway propagation between adjacent battery cells.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a schematic perspective view which separates and shows a partial configuration of a battery pack according to an embodiment of the present disclosure,
FIG. 2 is an exploded perspective view which schematically shows a cell unit including the configuration of a battery cell and a cell cover housed inside a battery pack according to an embodiment of the present disclosure;
FIG. 3 is a perspective view showing a state in which the components of FIG. 2 are coupled with each other;
FIG. 4 is a diagram showing a rupturable sheet included in the battery pack of the present disclosure;
FIG. 5 is an enlarged cross-sectional view of a section A of FIG. **4****,** which shows the appearance of the rupturable sheet before rupture;
FIG. 6 is a cross-sectional view showing a state in which the rupturable sheet of FIG. 5 is ruptured due to gas venting inside the battery cell;
FIG. 7 is an exploded perspective view which schematically shows a cell unit including the configuration of a battery cell and a cell cover housed inside a battery pack according to another embodiment of the present disclosure;
FIG. 8 is a perspective view showing a state in which the components of FIG. 7 are coupled with each other;
FIG. 9 is a diagram showing a rupturable sheet included in a battery pack according to another embodiment of the present disclosure;
FIG. 10 is a cross-sectional view taken along the line B-B' in FIG. 9, which shows a state before the rupturable sheet is ruptured.
FIG. 11 is a cross-sectional view showing a state in which the rupturable sheet of FIG. 10 is ruptured due to gas venting inside the battery cell; and
FIG. 12 is a diagram showing a region C in FIG. 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and a region are exaggerated.

In addition, it will be understood that when an element such as a layer, film, region, or plate is referred to as being formed or disposed "on" or "above" another element, it should be interpreted as including not only a case where an element such as a layer, film, region, or plate is directly on the other element but also a case where intervening elements are present. In contrast, when an element such as a layer, film, region, or plate is referred to as being formed or disposed "directly on" another element, it may mean that other intervening elements are not present. Further, the word "on" or "above" means disposed on or below a reference portion, and does not necessarily mean being disposed on the upper end of the reference portion toward the opposite direction of gravity. Meanwhile, similar to the case where it is described as being formed or disposed "on" or "above" another part, the case where it is described as being formed or disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

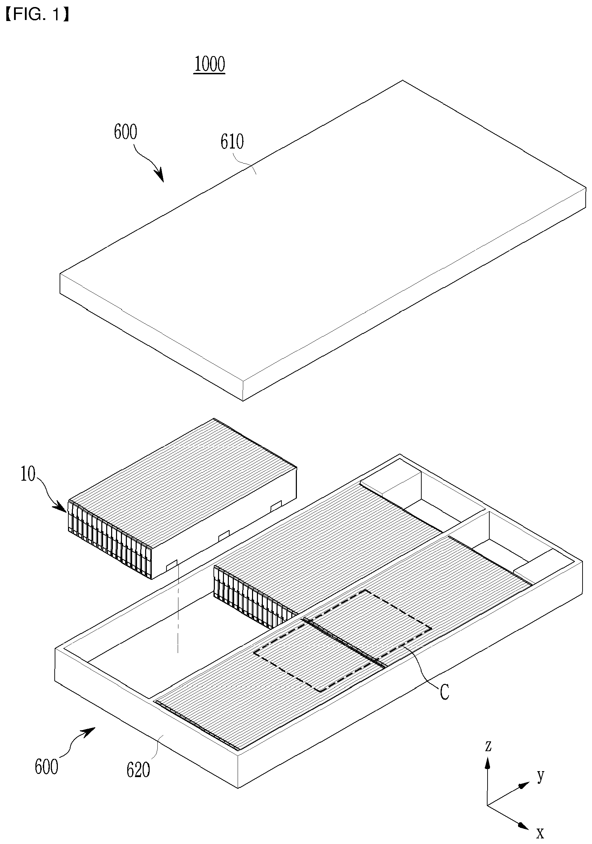

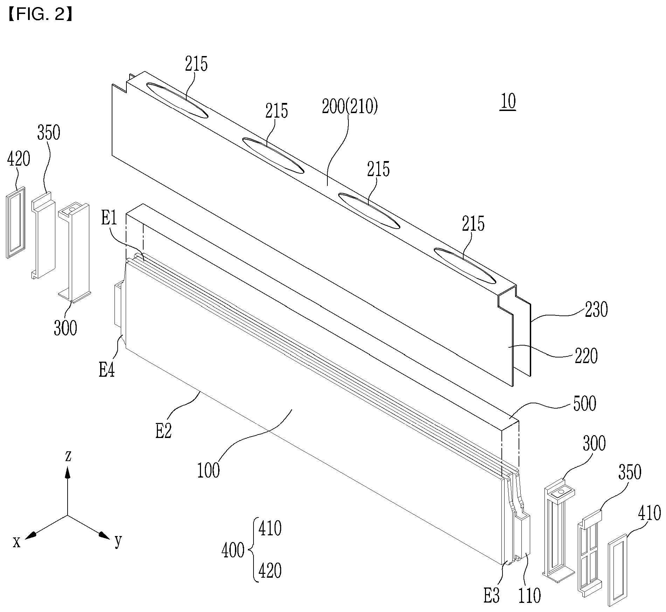

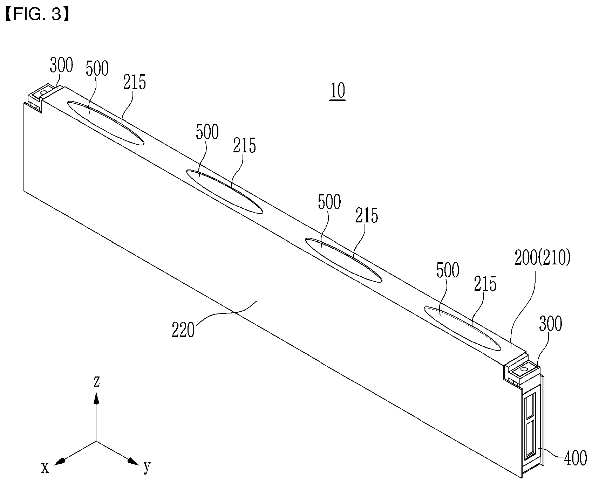

FIG. 1 is a schematic perspective view which separates and shows a partial configuration of a battery pack according to an embodiment of the present disclosure. And, FIG. 2 is an exploded perspective view which schematically shows a cell unit including the configuration of a battery cell and a cell cover housed inside a battery pack according to an embodiment of the present disclosure. FIG. 3 is a perspective view showing a state in which the components of FIG. 2 are coupled with each other.

Referring to FIGS. 1 to 3, the battery pack 1000 according to an embodiment of the present disclosure includes a battery cell 100, a cell cover 200, and a pack case 600.

A plurality of such battery cells 100 may be included in a battery pack 1000. And, the plurality of battery cells 100 may be stacked in at least one direction. For example, referring to FIG. 1, the plurality of battery cells 100 may be stacked and disposed in a horizontal direction, for example, in a left-right direction (x-axis direction in the figure). Further, the plurality of battery cells 100 may also be disposed in a front-back direction (y-axis direction in the figure) as shown in FIG. 1.

Moreover, although the plurality of battery cells 100 are arranged in the horizontal direction, they may be arranged in a shape forming a plurality of rows in the left-right direction and the horizontal direction. For example, referring to those shown in FIG. 1, the plurality of battery cells 100 may be stacked such that two rows of cells disposed in the left-right direction are provided in the front-back direction.

The battery pack 1000 according to the present disclosure can employ various forms of battery cells 100 known at the time of filing the present application. As an example, the battery cell may be a pouch-type battery cell. Such a pouch-type battery cell may be formed by housing an electrode assembly in a pouch case made of a laminate sheet including a resin layer and a metal layer, and then fusing the outer peripheral portion of the pouch case. Such battery cells may be formed in a rectangular sheet structure. However, the structure of the battery cell is not limited thereto, and various types of battery cells can be applied. Therefore, detailed descriptions of the configuration or the like of the battery cell are omitted.

The pack case 600 has an empty space formed in the inside thereof, and can house a plurality of battery cells 100. For example, the pack case 600 may comprise an upper case 610 and a lower case 620 as shown in FIG. 1. As a more specific example, the lower case 620 is configured in a box shape having an open upper end, and can house a plurality of battery cells 100 in the inner space. And, the upper case 610 may be configured in a lid shape that covers the open upper end of the lower case 620. At this time, the upper case 610 may be configured in a box shape having an open lower end. Further, in the inner space of the pack case 600, the cell cover 200 may also be housed together with the plurality of battery cells 100. The pack case 600 may be formed of a plastic or metal material. In addition, the pack case 600 may employ exterior cladding materials of various battery packs known at the time of filing of the present application.

The cell cover 200 may be configured to surround battery cells 100 in the inner space of a pack case 600. That is, the cell cover 200 may be configured to surround at least a part of the battery cells 100 among the plurality of battery cells 100 included in the battery pack 1000. Moreover, the cell cover 200 may be provided to at least partially surround the battery cell 100.

Further, the cell cover 200 may be configured to support the stacked state of the plurality of battery cells 100 inside the pack case 600 through a structure that surrounds the battery cells 100 in this way. For example, as shown in FIG. 1, a plurality of battery cells 100 may be stacked in a horizontal direction (x-axis direction in the figure). At this time, the cell cover 200 may be configured to stably maintain the stacked state of the plurality of battery cells 100 stacked in the horizontal direction in this way.

According to the aspect of the present disclosure, a plurality of battery cells 100 can be directly seated and housed inside the pack case 600 without a module case. **In** particular, in the case of the battery cells 100, the exterior cladding material is made of a ductile material, so that it may be vulnerable to an external impact and low in hardness. Therefore, it is not easy to house only the battery cells 100 themselves inside the pack case 600 without housing them in the module case. However, according to the present disclosure, the plurality of battery cells 100 are coupled with the cell cover 200 while being at least partially surrounded by the cell cover 200, and are directly housed in the pack case 600, and the stacked state thereof can be stably maintained.

Therefore, according to the aspect of the present disclosure, the battery pack 1000 does not need to be further provided with a module case, a stacking frame, or a fastening member such as a bolt for maintaining the stacked state of cells. Therefore, a space occupied by other components such as a module case or a stacking frame or a space for securing tolerance resulting therefrom can be eliminated. Therefore, the battery cells can occupy more space by the eliminated space, thereby further improving the energy density of the battery pack.

Further, according to the aspect of the present disclosure, since a module case, a stacking frame, a bolt, and the like are not provided, the volume or weight of the battery pack can be reduced, and the manufacturing process can be simplified.

Further, according to the aspect of the present disclosure, handling of the battery cell 100 can be made easier. For example, when a plurality of battery cells 100 are housed inside a pack case, the battery cells 100 may be held by a jig or the like. In the meantime, according to the present disclosure, the jig does not directly hold the battery cell 100, but can hold the cell cover 200 surrounding the battery cell 100. Therefore, it is possible to prevent damage or breakage of the battery cell 100 due to the jig.

Further, according to the aspect of the present disclosure, the cell cover 200 is coupled to the battery cell 100, thereby capable of effectively protecting the battery cell 100 without a module case.

The cell cover 200 may be composed of various materials to secure rigidity. In particular, the cell cover 200 may be composed of a metal material. In the case of such a metal material, the stacked state of the battery cells can be more stably maintained, and the battery cells can be more safely protected from an external impact. In particular, the cell cover 200 may comprise a steel material, more specifically a stainless steel (SUS) material. For example, the cell cover 200 may be entirely made of SUS material.

When the cell cover 200 is made of a steel material in this way, it has excellent mechanical strength and rigidity, so that the stacked state of the battery cells 100 can be more stably supported. Further, in this case, it is possible to more effectively prevent damage or breakage of the battery cell 100 from an external impact, for example, an acicular body or the like. Furthermore, in this case, handling of the battery cell 100 can be made easier.

Further, when the cell cover 200 is made of a steel material as in the above embodiment, the overall structure can be stably maintained due to its high melting point when flames generate from the battery cells 100. In particular, since the steel material has a higher melting point than an aluminum material, it does not melt even by the flames ejected from the battery cell 100, and its shape can be stably maintained. Therefore, it is possible to excellently secure flame propagation prevention or delay effects between battery cells 100, venting control effects, and the like.

The cell cover 200 may be configured to surround one or more battery cells 100. For example, as shown in FIGS. 2 and 3, one cell cover 200 may be configured to surround one battery cell 100 or a plurality of battery cells 100. In this case, the cell cover 200 may be individually coupled for each battery cell 100 among the plurality of battery cells 100, or the cell cover 200 may be configured to surround two or more battery cells 100 together.

The cell cover 200 may be at least partially adhered to the outer side surface of the battery cell 100. For example, the cell cover 200 may be configured such that its inner side surface is adhered to a receiving portion of the battery cell 100.

One or more cell covers 200 may be included in the battery pack 1000. In particular, the cell cover 200 may be configured so that the plurality of battery cells 100 included in a battery pack 1000 are grouped into a unit. In this case, one cell cover 200 may constitute one cell unit 10. Further, one cell unit 10 may include one or more battery cells 100. The battery pack 1000 may include a large number of cell units 10, and in this case, a large number of cell covers 200 may be included in the battery pack 1000. As an example, when the cell cover 200 is configured to surround one battery cell 100, the battery pack 1000 may include the same number of cell covers 200 as the number of battery cells 100. As another example, when the cell cover 200 is configured to surround two or more battery cells 100, the battery pack 1000 may include a smaller number of cell covers 200 than the number of battery cells 100.

The cell cover 200 may be configured to support the plurality of battery cells 100 in an erected state. As shown in FIG. 2, each battery cell 100 has two wide surfaces, and corner portions of the wide surfaces may have a sealing portion or a folded portion of the pouch exterior cladding material. Therefore, it is generally difficult to stack the battery cells 100 in a shape of being erected in an upper and lower direction. However, in the battery pack 1000 according to the present disclosure, the cell cover 200 may be configured to surround one or more battery cells 100 and also support the surrounded battery cells 100 in an erected state, that is, a standing state.

In particular, the cell cover 200 may be configured such that a large number of battery cells 100 can be stacked in a horizontal direction in a state of being erected in an upper and lower direction. For example, similar to the embodiment shown in FIGS. 1 to 3, a large number of cell covers 200 are stacked with each other in a horizontal direction, and each cell cover 200 may be configured to surround one or more battery cells 100. In this case, the cell cover 200 may make it possible to stably maintain a configuration in which a large number of battery cells 100 are stacked side by side in a horizontal direction in a state where each cell is erected.

In particular, the cell cover 200 may be configured to be self-supportable in the inner space of the pack case 600. That is, the cell cover 200 may be configured to maintain an erected state by itself without the aid of other components provided in the battery pack 1000, such as the pack case 600 or the battery cell 100.

For example, in the embodiment shown in FIG. 1, the cell cover 200 may be directly seated on the bottom surface of the lower case 620. At this time, a part of the cell cover 200, especially a lower end of the cell cover 200 may be seated in direct contact with the bottom surface of the lower case 620. In addition, the cell cover 200 may, when the lower end is seated in this way, be configured to stably maintain the seated state. At this time, when the cell cover 200 is composed of a metal material having excellent rigidity like steel, especially a SUS material, it is possible to more stably maintain the self-supporting state. Therefore, in this case, the erected state of the battery cell 100 can be supported more reliably.

The cell cover 200 may be configured to partially surround the battery cell 100 so that at least one side of the surrounded battery cell 100 is exposed to the outside. That is, the cell cover 200 may be configured to surround only a part of the battery cell 100 without completely surrounding the battery cell as a whole. In particular, the cell cover 200 may be configured such that at least one side of the battery cell 100 is exposed toward the pack case 600.

For example, referring to the embodiments shown in FIGS. 2 and 3, the cell cover 200 is configured to surround one battery cell 100, wherein the surrounded battery cell 100, that is, the lower portion of the battery cell 100 housed in the inner space, may not be surrounded by the cell cover 200. Therefore, the lower portion of the battery cell 100 is exposed toward the pack case 600, and may directly face the pack case 600. In particular, referring to the embodiment shown in FIG. 1, the lower portion of the battery cell 100 may be exposed toward the bottom surface of the lower case 620.

According to the embodiment of the present disclosure, it is possible to more effectively secure the cooling performance of the battery pack 1000. In particular, according to the above embodiment, the battery cell 100 and the pack case 600 may be brought into direct face-to-face contact. Therefore, heat emitted from each battery cell 100 is directly transferred to the pack case 600, thereby capable of improving the cooling performance. Further, in this case, since a separate cooling structure does not need to be provided between the battery cell 100 and the pack case 600, efficient cooling performance can be realized. Further, in this case, a space for flowing a coolant such as air between the battery cells 100 may not be provided.

Meanwhile, in the battery pack 1000 according to the present disclosure, a thermal interface material (TIM) may be interposed between mutually different components in order to increase heat transfer performance. For example, the TIM may be filled between the battery cell 100 and the cell cover 200, between the cell cover 200 and the pack case 600, and/or between the battery cell 100 and the pack case 600. In this case, the cooling performance of the battery pack 1000, for example, dual cooling performance or the like, can be further improved.

In particular, the cell cover 200 may be configured to surround an edge portion that is not provided with an electrode lead among multiple edge portions E1~E4 of the battery cells 100 housed in the inside thereof. For example, referring to the embodiment shown in FIG. 2, the battery cell 100 may comprise two electrode leads 110, that is, a cathode lead and an anode lead. At this time, the two electrode leads 110 may be respectively located at the front side edge portion E3 and the rear side edge portion E4. At this time, the cell cover 200 may be configured to surround one of the remaining two edge portions E1 and E2 excluding the front side edge portion E3 and the rear side edge portion E4.

Referring to FIGS. 2 and 3, the battery cell 100 may be formed in a substantially hexahedral shape. And, the electrode leads 110, that is, an anode lead and a cathode lead, may be respectively formed on two of the six surfaces. Further, the cell cover 200 is provided to surround at least a part of three of the remaining four surfaces excluding the two surfaces on which the electrode leads 110 are formed at the six-surface battery cells 100.

According to the embodiment of the present disclosure, a configuration that supports and protects one or more battery cells can be easily realized by one cell cover 200. In particular, according to the above embodiment, the lower side edge portion E2 may be in direct face-to-face contact with the pack case 600 without being surrounded by the cell cover 200. Therefore, the heat of the battery cells 100 surrounded by the cell cover 200 can be quickly and smoothly discharged to the lower pack case 600 side. **Thus,** it is possible to more effectively secure the cooling performance of the battery pack 1000.

**In** particular, such a configuration can be more effectively implemented when cooling is mainly performed in the lower portion of the pack case 600. For example, in the case of a battery pack mounted on an electric vehicle, since the pack is mounted on the lower portion of the vehicle body, cooling can be mainly performed in the lower portion of the pack case 600. At this time, when the lower side edge portion E2 of each battery cell 100 is in face-to-face contact with the pack case 600 as in the above embodiment, heat is quickly transferred from each battery cell 100 to the pack case 600 side, so that the cooling performance can be further improved.

Referring to FIGS. 2 and 3, the cell cover 200 may be formed in a shape generally similar to the letter n. And, through such a configuration, the cell cover 200 may be configured to cover other portions of the battery cell 100 housed in the inside, except for the front side (y-axis direction) and the rear side (-y-axis direction), and the lower side (-z axis direction) where the electrode lead 110 protrudes. That is, the cell cover 200 may be provided to cover the outer side and the upper side of the receiving portion of the battery cell 100 housed in the inside thereof.

More specifically, the cell cover 200 may include an upper side cover portion 210, a first side cover portion 220, and a second side cover portion 230 as shown in FIG. 2.

Here, the upper side cover portion 210 may be configured to surround the upper portion (z-axis direction) of the battery cell 100 housed in the inside thereof. In particular, the upper side cover portion 210 may be configured to contact with or be spaced apart from the upper side edge portion E1 of the battery cell 100. Further, the upper side cover portion 210 may be configured in a planar shape. In this case, the upper side cover portion 210 may have a cross section formed in a straight line shape in a horizontal direction, so that the upper side edge portion E1 of the battery cell 100 can be surrounded in a straight line shape from the outside.

The first side cover portion 220 may be configured to extend in a lower direction (-z-axis direction) from one end of the upper side cover portion 210. For example, the first side cover portion 220 may be configured to extend long in a lower direction (-z-axis direction in the figure) at the left side end (x-axis direction) of the upper side cover portion 210. Moreover, the first side cover portion 220 may be formed in a planar shape. At this time, the first side cover portion 220 may be configured in a shape of being bent at the upper side cover portion 210.

Further, the first side cover portion 220 may be configured to surround the outer side of one side receiving portion of the battery cell 100 housed in the inside thereof. For example, when one battery cell 100 is housed in the cell cover 200, the first side cover portion 220 may be configured such that the left side surface of the receiving portion of the housed battery cell 100 is surrounded from the left side. Here, the first side cover portion 220 may directly contact the outer side surface of the receiving portion.

The second side cover portion 230 may be located to be spaced apart from the first side cover portion 220 in a horizontal direction. Further, the second side cover portion 230 may be configured to extend in a lower direction from the other end of the upper side cover portion 210. For example, the second side cover portion 230 may be configured to extend long in a lower direction (z-axis direction) at the right end (-x-axis direction) of the upper side cover portion 210. Moreover, the second side cover portion 230 may also be configured in a planar shape similar to the first side cover portion 220. At this time, the second side cover portion 230 and the first side cover portion 220 may be disposed in parallel to each other in a state of being spaced apart in a horizontal direction.

Further, the second side cover portion 230 may be configured to surround the outer side of the other side receiving portion of the battery cell 100 housed in the inside thereof. For example, when one battery cell 100 is housed in the cell cover 200, the second side cover portion 230 may be configured such that the right side surface of the receiving portion of the housed battery cell 100 is surrounded from the right side. Here, the second side cover portion 230 may directly contact the outer side surface of the receiving portion.

In the above embodiment, the inner space of the cell cover 200 may be defined by the upper side cover portion 210, the first side cover portion 220 and the second side cover portion 230. Further, the cell cover 200 may house one or more battery cells 100 in the inner space defined in this way.

Further, in the above embodiment, the lower side ends (-z-axis direction) of the first side cover portion 220 and the second side cover portion 230 may contact the bottom surface of the pack case 600. In particular, such a contact configuration between the lower side ends of the first side cover portion 220 and the second side cover portion 230 and the pack case 600 may be configured to extend long in a front and back direction (y-axis direction in the figure). According to such an embodiment, it is possible to more stably realize the self-supporting configuration of the cell cover 200 that can maintain the battery cell 100 housed in the inside in a standing state.

Moreover, the first side cover portion 220 and the second side cover portion 230 may have the same height as each other. That is, the first side cover portion 220 and the second side cover portion 230 may be identical in the length extending in a lower direction from the upper side cover portion 210. In this case, the self-supporting configuration of the cell cover 200 can be more easily realized.

Meanwhile, the cell cover 200 and the battery cell 100 according to an embodiment of the present disclosure will be described again. The upper side cover portion 210 may face the upper side edge portion E1 of the battery cell 100, and may surround the upper side edge portion E1 together with the first side cover portion 220 and the second side cover portion 230.

Further, the cross-sectional area of the first side cover portion 220 and the second side cover portion 230 is formed larger than the cross-sectional area of the battery cell 100 where the first side cover portion 220 and the second side cover portion 230 face each other, thereby being able to prevent the receiving portion from being exposed to the outside and thus secure the safety to a maximum.

Meanwhile, in the above embodiment, the cell cover 200 having an n-shaped configuration has been mainly shown and described, but the cell cover 200 can be configured in various other shapes. For example, the cell cover 200 may be formed in various other shapes such as an I-shape, a U-shape, and an L-shape.

Referring to FIG. 2, the battery pack 1000 according to the present disclosure may further include a busbar assembly 300. Here, the busbar assembly 300 may be configured to electrically connect the plurality of battery cells 100 to each other. For example, as shown in FIG. 2, the busbar assembly 300 may be coupled to the electrode leads 110 of the plurality of battery cells 100 to electrically connect between the plurality of battery cells 100 in series and/or in parallel. The busbar assembly 300 may comprise a busbar terminal that is composed of an electrically conductive material such as copper or aluminum and is in direct contact with the electrode lead 110, and a busbar housing that is made of an electrically insulating material such as plastic and supports the busbar terminal.

Moreover, when the electrode leads 110 are provided on both sides of the battery cells 100, the busbar assembly 300 may also be included on both sides where the electrode lead 110 is provided. For example, as shown in FIG. 2, when the electrode lead 110 protrudes to both the front side and the rear side, the busbar assembly 300 may also be located on both the front side and the rear side.

The busbar assembly 300 may be coupled with one or more cell covers 200. At this time, the busbar assembly 300 may be coupled to an end of one cell cover 200. At this time, one or a plurality of battery cells 100 may be housed in one cell cover 200.

The busbar assembly 300 may be coupled with the cell cover 200 in various ways. For example, the busbar assembly 300 may be coupled and fixed to the cell cover 200 through various fastening methods such as adhesion, welding, fitting, hooking, bolting, and riveting.

Referring to FIGS. 2 and 3, the battery pack 1000 according to the present disclosure may further include an insulating cover portion 350. At this time, the insulating cover portion 350 is made of an electrical insulating material, prevents the busbar assembly 300 from being exposed to the outside by the end plate, and can secure and maintain electrical insulation properties.

Meanwhile, the battery pack 1000 according to the present disclosure may further include an end plate 400. At this time, the end plate 400 may include a first end plate 410 and a second end plate 420, respectively covering the front side (y-axis direction) and the rear side (-y-axis direction) of the cell cover 200. That is, the first end plate 410 may be formed on the outermost contours of the busbar assembly 300 and the insulating cover portion 350 covering the front edge portion E3 of the battery cell 100. Further, the second end plate 420 may be formed at the outermost contours of the busbar assembly 300 and the insulating cover portion 350 that cover the rear edge portion E4 of the battery cell 100.

The end plate 400 may secure the structural stability of the cell unit 10 by fixing the busbar assembly 300 and the insulating cover portion 350. In this case, the end plate 400 may be formed with a hole through which the insulating cover portion 350 is exposed, and in some cases, directional venting may be guided through the hole.

The battery pack 1000 includes a rupturable sheet 500. The rupturable sheet 500 is formed between the upper portion of the cell cover 200 and the battery cell 100. More specifically, the rupturable sheet 500 may be formed between the upper side cover portion 210 of the cell cover 200 and the upper edge portion E1 of the battery cell 100. Further, the rupturable sheet 500 included in the battery pack 1000 according to the present embodiment includes a shape memory alloy (SMA).

A hole 215 may be formed in the cell cover 200, and a plurality of holes 215 may be formed on the cell cover 200. At this time, the hole 215 may be formed on the upper portion of the cell cover 200, that is, on the upper cover part 210. That is, a plurality of holes 215 are formed in the cell cover 200, and the holes 215 may be formed to pass through the upper portion of the cell cover 200. Therefore, the gas inside the battery cell 100 and the cell unit 10 may be smoothly discharged to the outside through the hole 215 formed in the cell cover 200.

Next, the rupturable sheet 500 included in the battery pack 1000 according to the present embodiment will be described in more detail.

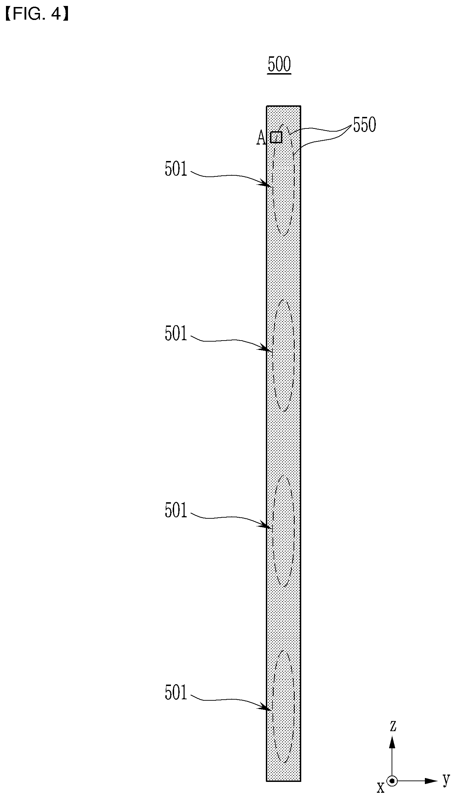

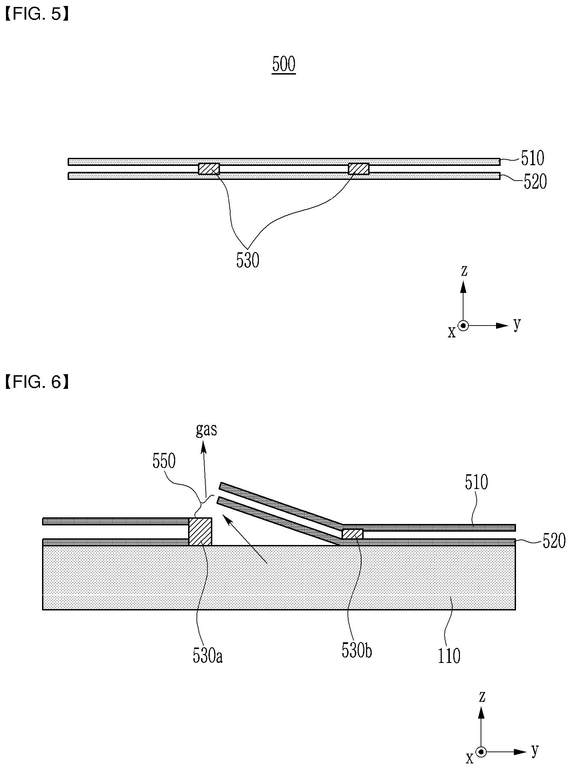

FIG. 4 is a diagram showing a rupturable sheet included in the battery pack of the present disclosure. FIG. 5 is an enlarged cross-sectional view of a section A of FIG. 4, which shows the appearance of the rupturable sheet before rupture. FIG. 6 is a cross-sectional view showing a state in which the rupturable sheet of FIG. 5 is ruptured due to gas venting inside the battery cell.

Referring to FIGS. 2 to 6, the rupturable sheet 500 of the present disclosure may include a venting portion 501 formed in one region of the rupturable sheet 500 corresponding to the position of the hole 215 formed in the cell cover 200.

At this time, the venting portion 501 is formed with a plurality of venting holes 550 in one region of the rupturable sheet 500 corresponding to the hole 215 of the cell cover 200, thereby forming the venting portion 501 as will be described later. Therefore, the venting portion 501 may be formed in a portion of the rupturable sheet 500 corresponding to the position of the edge portion of the hole 215. Therefore, the rupturable sheet 500 may have a venting portion 501 formed by gathering a plurality of venting holes 550, and the venting portions 501 are also formed in plural numbers on the rupturable sheet 500, thereby capable of forming a plurality of venting paths. Further, during gas generation and venting in the battery cells 100 and cell unit 10 through the venting paths, gas discharge can be rapidly performed.

However, the venting hole 550 is formed by rupturing the rupturable layers 510 and 520, as will be described below with reference to FIG. 5, and the venting hole 550 is not formed in a normal condition of the battery pack before the rupturable layers 510 and 520 are ruptured. Therefore, the rupturable sheet 500 in the normal condition of the battery pack can be maintained in a shape in which the venting hole 550 is not formed, as shown in FIG. 2.

At this time, the venting portion 501 of the rupturable sheet 500 may include a shape memory alloy. That is, among the portions of the rupturable sheet 500, the portion of the rupturable sheet 500 corresponding to the position of the hole 215, that is, the venting portion 501, may include a shape memory alloy.

Referring to FIG. 5, the rupturable sheet 500 includes a plurality of rupturable layers 510 and 520 that may include a first rupturable layer 510 and a second rupturable layer 520, and a rupture guide member 530 formed between the plurality of rupturable layers 510 and 520. The plurality of rupturable layers 510 and 520 may include a larger number of rupturable layers, but an example will be described based on FIG. 5 which includes two rupturable layers, first rupturable layer 510 and second rupturable layer 520. Here, the first rupturable layer 510 is located facing one surface of the second rupturable layer 520, and the other surface of the second rupturable layer 520 is located facing the battery cell 100. That is, the second rupturable layer 520 may be located between the battery cell 100 and the first rupturable layer 510. In other words, the plurality of rupturable layers 510 and 520 may have a structure in which the second rupturable layer 520 and the first rupturable layer 510 are sequentially stacked on the battery cell 100.

The rupturable sheet 500 of FIG. 5 shows a cross section of the venting portion 501, which is a portion of the rupturable sheet 500 corresponding to the hole 215 of the cell cover 200, among the regions of the rupturable sheet 500. Specifically, the venting portion 501 may include a plurality of rupturable layers 510 and 520 and a rupture guide member 530. Therefore, the rupture guide member 530 may be formed in a portion of the rupturable sheet 500 corresponding to the position of the hole 215 of the cell cover 200.

Specifically, the rupture guide member 530 formed between the first rupturable layer 510 and the second rupturable layer 520 is formed to contact the first rupturable layer 510 and the second rupturable layer 520, respectively..

The first rupturable layer 510 and the second rupturable layer 520 may be formed of a plate-shaped sheet, but are not limited thereto.

The rupture guide member 530 may include a shape memory alloy. More specifically, the rupture guide member 530 includes a shape memory alloy or is formed of a shape memory alloy, so that it expands as the shape memory alloy expands. That is, when heat of a certain temperature or higher is applied to the rupturable sheet 500, the rupture guide member 530 expands, thereby guiding rupture and cutting of the rupturable sheet 500. This may be based on the feature that shape memory alloys, even if they exist in a different shape at low temperature, memorize their shape at high temperature, and therefore, when heat is applied, they return to their high temperature shapes.

Specifically, when gas inside the battery cell 100 and the cell unit 10 is vented, heat of a predetermined temperature or higher may be generated inside the battery. More specifically, heat having a temperature of at least 100 degrees or higher may also be generated during the gas venting. Therefore, when the gas vents, heat may be transferred to the rupture guide member 530.

In this case, the rupture guide member 530 may include a material that expands when a temperature of at least 100 degrees or higher is applied. That is, the rupture guide member 530 may include a shape memory alloy that expands when a temperature of at least 100 degrees or higher is applied. Therefore, when gas vents at the battery cell 100 and the cell unit 10, the rupture guide member 530 may expand. In summary, due to the shape change of the rupture guide member 530 at high temperatures, the first rupturable layer 510 and the second rupturable layer 520 may also allow their shape to be deformed, ruptured and/or cut.

Referring to FIG. 6, the rupture guide member 530 may include a first rupture guide member 530a and a second rupture guide member 530b. The first rupture guide member 530a may be a rupture guide member 530 that expands by heat transferred during gas venting, and the second rupture guide member 530b may be a rupture guide member 530 that has not yet been expanded.

Specifically, the first rupture guide member 530a can be expanded by the heat, and in this case, partial regions of the first rupturable layer 510 and the second rupturable layer 520 may be cut. That is, due to the expansion of the rupture guide member 530, the rupturable layers 510 and 520 may be deformed and cut. In this case, a venting hole 550 may be formed on the rupturable sheet 500 by the first rupturable layer 510 and the second rupturable layer 520 that have been deformed and cut, so that the gas inside the battery cell 100 and the cell unit 10 can be discharged to the outside.

More specifically, referring to FIGS. 4 to 6, the shape of the venting hole 550 may be formed while the first rupturable layer 510 and the second rupturable layer 520 are cut and lifted upward. Therefore, as shown in FIG. 4, venting holes 550 may be formed along solid black lines or curved shapes. That is, the shape of the venting hole 550 may correspond to the shape of the hole 215 of the cell cover 200. Specifically, the shape of the venting hole 550 may be the same as or smaller than the shape of the hole 215 of the cell cover 200. However, the shape of the venting hole 550 is not limited thereto.

For example, when the heat is transferred to the second rupture guide member 530b, the first rupturable layer 510 and the second rupturable layer 520 may also be cut by the second rupture guide member 530b. In this case, the venting hole 550 may be formed to have a larger region than the size of the venting hole 550 when only the first rupture guide member 530a is ruptured.

Further, the rupturable sheet 500, particularly the venting portion 501 on the rupturable sheet 500, may include a plurality of rupture guide members 530, so that a plurality of the venting holes 550 may be formed on the rupturable sheet 500 and the venting portion 501.

Further, the rupture guide member 530 may be formed along the shape of the hole 215 of the cell cover 200. That is, a plurality of venting holes 550 may be formed along the shape in which the plurality of rupture guide members 530 are formed, and the shape of the venting portion 501 may be formed along the shape in which the plurality of venting holes 550 are formed. In other words, a plurality of venting holes 550 are formed in the portion of the rupturable sheet 500 corresponding to the position of the hole 215, and a plurality of venting holes 550 formed in a portion of the rupturable sheet 500 corresponding to the position of the hole 215 may form the venting portion 501.

Thus, the venting hole 550 is not formed in the rupturable sheet 500 in a normal operating condition of the battery cell 100 and the cell unit 10, but when gas is vented inside the battery cell 100, a venting hole 550 is formed on the rupturable sheet 500 by the rupture guide member 530, so that gas inside the battery cell 100 can be effectively discharged to the outside.

Therefore, the ruptured sheet 500 included in the battery pack 1000 according to the present embodiment is formed with a venting hole 550 and a venting portion 501 only when gas vents in the battery cell 100 and the cell unit 10, thereby capable of improving the stability of the battery pack 1000 and securing the performance of the battery pack 1000.

In addition, although not disclosed in this figure, the venting portion 501 provided in the rupturable sheet 500 including a shape memory alloy can also be provided in the cell cover 200. In this case, the venting portion provided in the cell cover 200 may be provided in the same shape as the hole 215. However, the venting portion provided in the cell cover 200 may be formed through the same mechanism as the venting portion 501 formed in the rupturable sheet 500 as described above. At this time, the rupturable sheet 500 may not be located between the cell cover 200 and the battery cell.

In summary, the cell cover 200 may be provided to have the same structure as the rupturable sheet 500. Accordingly, when heat of a certain temperature or higher is applied to the cell cover 200, a venting portion is formed in the cell cover 200, and one region of the cell cover 200 is ruptured and cut to vent gas or the like to the outside. The battery pack according to such a modification may be configured such that the same configuration as the venting portion 501 of the rupturable sheet 500 without including rupturable sheet 500 can be included in the cell cover 200 itself. Therefore, the battery manufacturing cost can be reduced and the process efficiency can be improved.

Next, a modification of the battery pack according to an embodiment of the present disclosure will be described, and descriptions of the same configuration as those described above will be omitted.

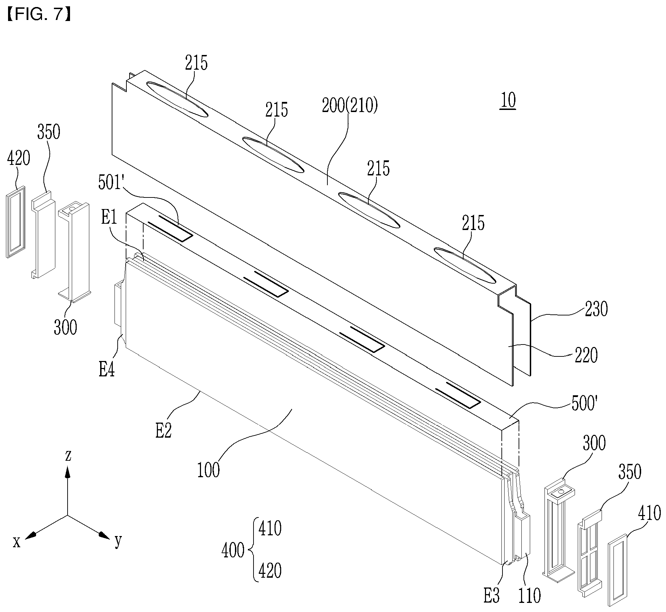

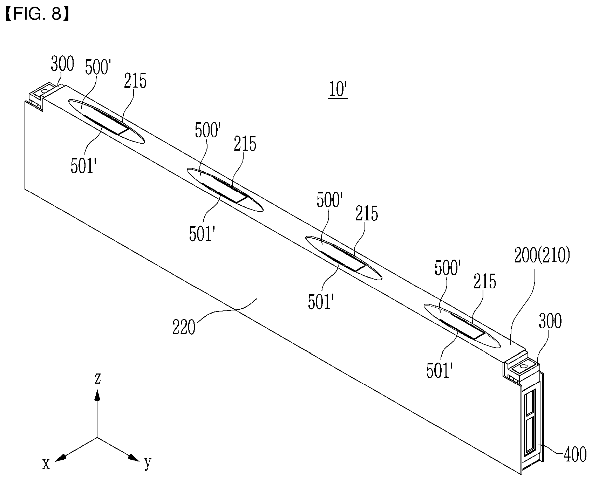

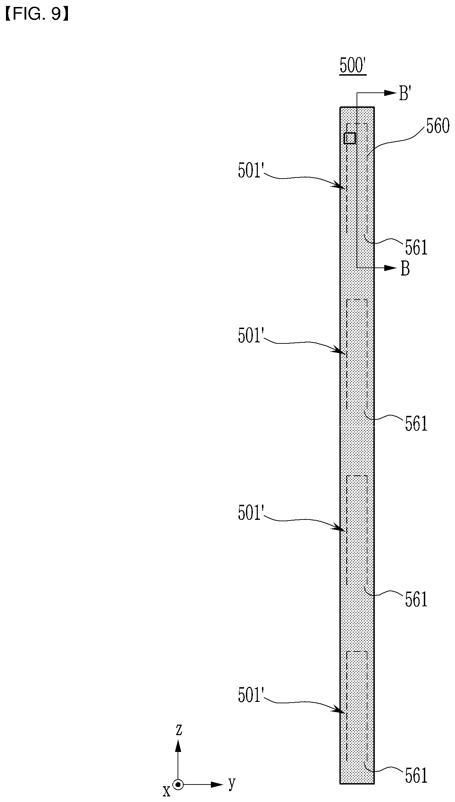

FIG. 7 is an exploded perspective view which schematically shows a cell unit including the configuration of a battery cell and a cell cover housed inside a battery pack according to another embodiment of the present disclosure. FIG. 8 is a perspective view showing a state in which the components of FIG. 7 are coupled with each other. FIG. 9 is a diagram showing a rupturable sheet included in a battery pack according to another embodiment of the present disclosure.

Referring to FIGS. 7 to 9, a battery pack according to another embodiment of the present disclosure includes a battery cell 100, a cell cover 200 that covers the battery cell 100, and a rupturable sheet 500' located between the battery cell 100 and the cell cover 200.

The rupturable sheet 500' is formed between the battery cell 100 and the upper portion of the cell cover 200. The rupturable sheet 500' may include a venting portion 501' formed in one region of the rupturable sheet 500 corresponding to the position of the hole 215 formed in the cell cover 200. A plurality of venting portions 501' may be formed in one region of the rupturable sheet 500' corresponding to the position of the hole 215 of the cell cover 200. That is, the number of venting portions 501' may correspond to the number of holes 215. Specifically, the number of venting portions 501' may be the same as the number of holes 215 or less than the number of holes 215.

At least one corner of the venting portion 501' is connected to the rupturable sheet 500', and the remaining corners may constitute a rupture portion 560 by rupturing the rupturable sheet 500' in a high temperature state.

Specifically, referring to FIG. 9, the venting portion 501' may include a plurality of rupture portions 560.

The rupture portion 560 may be one region of the rupturable sheet 500' formed by rupturing the rupturable sheet 500'. Specifically, the rupture portion 560 is not formed in a battery pack in a normal state, but when high-temperature gas or flame is generated at the battery cell 100, it may be one region of the rupturable sheet 500' formed by rupturing the rupturable sheet 500'.

The rupture portion 560 may include at least three corners. Specifically, at least one corner is connected to the rupturable sheet 500', and the remaining corners may constitute the rupture portion 560. Here, one corner connected to the rupturable sheet 500' may be defined as a connecting portion 561.

Other corners constituting the rupture portion 560 other than the connecting portion 561 may be located close to the first end plate 410 among the first end plate 410 and the second end plate 420. Here, being located close to the first end plate 410 may also be described as being located away from the second end plate 420. That is, in the venting portion 501', the rupture portion 560 may be located close to the first end plate 410, and the connecting portion 561 may be located close to the second end plate 420.

Further, the connecting portion 561 connected to the rupturable sheet 500' in the rupture portion 560 may extend along the width direction (x-axis direction in FIG. 7) of the rupturable sheet 500'. In other words, the remaining corners forming the rupture portion 560 may be formed to be close to the second end plate 420 along the longitudinal direction (y-axis direction of FIG. 7 ) of the rupturable sheet 500'.

Accordingly, in the rupturable sheet 500' according to the present embodiment, the remaining corner forming the rupture portion 560 are formed in a direction approaching the second end plate 420 (y-axis direction in FIG. 7), thereby being able to guide a discharge path of gas and flame discharged by the rupture portion 560.

More specifically, each corner formed in the rupture portion 560 may be connected to each other. As an example, the rupture portion 560 has a rectangular shape, the connecting portion 561, which is one corner, is connected to the rupturable sheet 500', and the other corner may form a rupture portion 560 while rupturing the rupturable sheet 500' in a high temperature state. However, the shape of the rupture portion 560 is not limited thereto, and any shape that can guide discharge of gas and flame within the cell unit 10' in a predetermined direction can be applied.

Thereby, the cell unit 10' according to the present embodiment can cut a part of the rupturable sheet 500' to form the rupture portion 560, which thus has the advantage of simplifying the manufacturing process and reducing manufacturing costs.

In summary, a plurality of rupture portions 560 are gathered on the rupturable sheet 500' to form a venting portion 501', and a plurality of venting portion 501' may also be formed on the rupturable sheet 500'. Therefore, the rupturable sheet 500' may be formed with a plurality of venting paths. Further, when high-temperature gas or flame is generated in the battery cell 100 and the cell unit 10' through the venting path, it can be quickly discharged to the outside.

Next, the venting portion 501' and the rupture portion 560 will be described in detail.

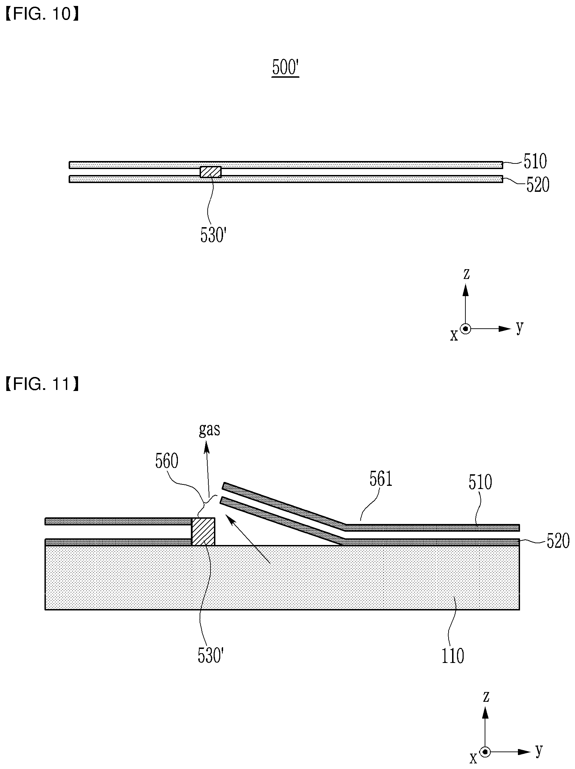

FIG. 10 is a cross-sectional view taken along the line B-B' in FIG. 9, which shows a state before the rupturable sheet is ruptured. FIG. 11 is a cross-sectional view showing a state in which the rupturable sheet of FIG. 10 is ruptured due to gas venting inside the battery cell.

Referring to FIGS. 10 and 11, the rupturable sheet 500' according to another embodiment of the present disclosure includes a plurality of rupturable layers 510 and 520, and a rupture guide member 530'. Specifically, the rupturable sheet 500' may include a first rupturable layer 510 and the second rupturable layer 520 having a stacked structure, and a rupture guide member 530' located between the first rupturable layer 510 and the second rupturable layer 520. Here, the rupture guide member 530' may be located at a portion of the rupturable sheet 500' where the rupture portion 560 is formed.

Specifically, the rupture guide member 530' formed between the first rupturable layer 510 and the second rupturable layer 520 may be formed to be in contact with the first rupturable layer 510 and the second rupturable layer 520, respectively.

Therefore, due to the shape change of the rupture guide member 530' in a high temperature state, the first rupturable layer 510 and the second rupturable layer 520 can also allow their shapes to be deformed, ruptured, and/or cut.

In summary, the rupture guide member 530' is configured to expand by high-temperature heat, gas, or flame generated from the battery cell 100, thereby cutting a partial region of the first rupturable layer 510 and the second rupturable layer 520. That is, since the rupture guide member 530' expands, the rupturable layers 510 and 520 are deformed and cut. Therefore, a rupture portion 560 may be formed on the rupturable sheet 500' by the first rupturable layer 510 and the second rupturable layer 520 that have been deformed and cut. At this time, the first rupturable layer 510 and the second rupturable layer 520 where the connecting portion 561 is located may not be cut. In other words, gas inside the battery cell 100 and the cell unit 10 may be discharged to the outside due to the formation of the rupture portion 560.

More specifically, the rupture portion 560 may be formed while the first rupturable layer 510 and the second rupturable layer 520 are cut and lifted upward (in the z-axis direction). Therefore, as shown in FIGS. 7 and 8, the rupture portion 560 may be formed along the solid black line, but the shape of the rupture portion 560 is not limited thereto.

Further, the rupturable sheet 500' , particularly the venting portion 501' on the rupturable sheet 500' , may include a plurality of rupture guide members 530' , so that a plurality of rupture portions 560 can be formed on the rupturable sheet 500' and the venting portion 501'.

Referring to FIGS. 7 to 11, the rupture guide member 530' may be located inside the hole 215 of the cell cover 200. That is, a plurality of rupture portions 560 may be formed along the positions where the plurality of rupture guide members 530' are formed, and the shape of the venting portion 501' may be formed according to the shape in which the plurality of rupturable parts 560 are formed. **In** other words, a plurality of rupture portions 560 are formed in the portion of the rupturable sheet 500' corresponding to the position of the hole 215, and the plurality of rupture portions 560 formed in the portion of the rupturable sheet 500' corresponding to the position of the hole 215 may form the venting portion 501'.

Accordingly, a gap is generated between the at least two venting portions 501' and the upper portion of the cell cover 200, and this gap can secure more diverse discharge paths of gas and flame in the cell cover 200. That is, since gas and flame discharge in the cell cover 200 can be discharged through respective paths, the speed at which the gas and flame are discharged can be adjusted.

Further, the rupturable sheet 500' includes at least two rupture portions 560, but the at least two rupture portions 560 may be spaced apart from each other along the longitudinal direction of the rupturable sheet 500'. More specifically, at least two rupture portions 560 may be disposed in the same direction. Further, the number of rupture portions 560 may be 4 as shown in the figure, but is not limited thereto, and various numbers can be applied.

Thus, the rupture portion 560 is not formed in the rupturable sheet 500' in normal operating states of the battery cell 100 and the cell unit 10', but when gas is vented inside the battery cell 100, a rupture portion 560 is formed on the rupturable sheet 500' by the rupture guide member 530', so that gas inside the battery cell 100 can be effectively discharged to the outside.

In summary, the rupturable sheet 500' included in the battery pack according to the present embodiment is formed with a rupture portion 560 and a venting portion 501' only when gas vents in the battery cell 100 and the cell unit 10', thereby capable of improving the stability of the battery pack 1000 can be improved and securing the performance of the battery pack 1000.

In addition, although not disclosed in this figure, the venting portion 501' provided in the rupturable sheet 500' including a shape memory alloy may also be provided in the cell cover 200. In this case, the cell cover 200 may not include the hole 215, and may be provided to have the same shape as the venting portion 501' provided in the rupturable sheet 500'.

The venting portion provided in the cell cover 200 may be formed through the same mechanism as the venting portion 501' formed in the rupturable sheet 500' as described above. At this time, the rupturable sheet 500' may not be located between the cell cover 200 and the battery cell.

In summary, the cell cover 200 may be provided to have the same structure as the rupturable sheet 500', and therefore, when heat of a certain temperature or higher is applied to the cell cover 200, a venting portion is formed in the cell cover 200, and as one region of the cell cover 200 is ruptured or cut, gas or the like can be vented to the outside. The battery pack according to such a modification may include the same configuration as the venting portion 501' of the rupturable sheet 500' in the cell cover 200 itself without including the rupturable sheet 500'. Therefore, the battery manufacturing costs can be reduced and the process efficiency can be improved.

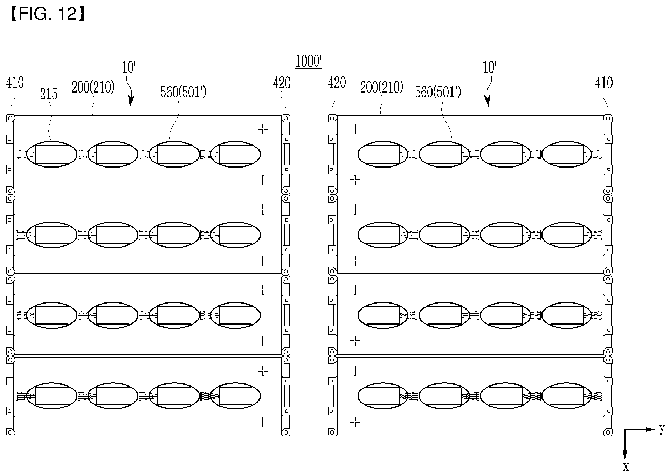

FIG. 12 is a diagram showing a region C in FIG. 1.

Referring to FIGS. 1 and 12, the battery pack 1000' according to another embodiment of the present disclosure may be formed such that the second end plates 420 of the cell units 10' facing each other are located close to each other. Therefore, the venting portion 501' may be formed to vent gas by being lifted in a direction in which the first end plate 410 is disposed in a high temperature state. More specifically, the venting portion 501' may guide the discharge path of the gas and flame within the cell cover 200' to be discharged in the direction in which the first end plate 410 is disposed.

In other words, the plurality of cell units 10' may be mounted facing each other in the pack case. In this case, the venting portions 501' provided in the plurality of cell units 10' facing each other may be disposed to face in opposite directions. That is, the rupture portions 560 provided in the plurality of cell units 10' facing each other may be disposed to face in opposite directions. For example, in this figure, when the venting part 501' provided in one cell unit 10' is located toward the -y axis direction, the venting portion 501' provided in the other cell unit 10' opposing thereto may be mounted to be located toward the y-axis direction.

At this time, since the first end plate 410 of the cell unit 10' housed in the battery pack 1000' is formed toward the outside of the battery pack 1000, not toward the inner space of the pack case 600, it is possible to minimize damage to the normally operating cell unit 10 due to the flame and gas discharged by the venting portion 501'.

In addition, FIG. 12 shows a state in which flames and gases are generated in all of the cell units 10' introduced into the battery pack 1000', but even if some of the cell units 10' introduced into the battery pack 1000 generate flames and gas, it is possible to minimize the influence on the adjacent cell units 10' or the cell units 10' facing each other and improve the safety of the battery pack 1000'.

Meanwhile, although not specifically mentioned above, the battery pack according to an embodiment of the present disclosure may further include a battery management system (BMS) and/or a cooling device that control and manage battery's temperature, voltage, etc.

The battery pack according to an embodiment of the present disclosure can be applied to various devices. For example, a device to which a battery pack is applied may be vehicle means such as an electric bike, an electric vehicle, and a hybrid electric vehicle. However, the above-mentioned device is not limited thereto, and the battery pack according to the present embodiment can be used in various devices other than the above-mentioned examples, which also falls under the scope of the present disclosure.

Although the invention has been described in detail above with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

- 10, 10':: cell unit
- 100:: battery cell
- 110:: electrode lead
- 200, 200':: cell cover
- 210:: upper side cover portion
- 215:: hole
- 220:: first side cover portion
- 230:: second side cover portion
- 300:: busbar assembly
- 350:: insulating cover portion
- 400:: end plate
- 500, 500':: rupturable sheet
- 501, 501':: venting portion
- 510:: first rupturable layer
- 520:: second rupturable layer
- 530:: rupture guide member
- 550:: venting hole
- 560:: rupture portion
- 561:: connecting portion
- 600:: pack case
- 610:: upper case
- 620:: lower case
- 1000, 1000':: battery pack

## Claims

1. A battery pack (1000) comprising:
a plurality of battery cells (100) stacked in one direction;
a pack case (600) that houses the battery cells in an inner space;
a cell cover (200) that at least partially surrounds at least a part of the plurality of battery cells in the inner space of the pack case; and
a rupturable sheet (500) formed between an upper portion (210) of the cell cover and the battery cell, **characterized in that** the rupturable sheet comprises a plurality of rupturable layers (510, 520), and a rupture guide member (530) formed between the plurality of rupturable layers, wherein the rupture guide member is configured to expand at a certain temperature or higher to rupture and cut the plurality of rupturable layers.

2. The battery pack of claim 1, wherein:
the cell cover comprises a plurality of holes (215) formed while passing through an upper portion of the cell cover, and
the rupturable sheet comprises a plurality of venting portions (501) formed in one region of the rupturable sheet corresponding to the hole.

3. The battery pack of claim 2, wherein:
the venting portion is formed by a plurality of venting holes (550) that are formed in one region of the rupturable sheet corresponding to the hole in the cell cover.

4. **The** battery pack of claim 3, wherein:
the shape of the venting hole is the same as or smaller than the shape of the cell cover.

5. **The** battery pack of claim 2, wherein:
the venting portion comprises,
a rupture portion (560) including at least three corners; and
a connecting portion (561) that is one corner connected to the rupturable sheet.

6. The battery pack of claim 5, wherein:
the rupture portion is formed along the longitudinal direction of the rupturable sheet, and
the connecting portion is formed to extend along the widthwise direction of the rupturable sheet.

7. The battery pack of claim 5, further comprising:
a first end plate (410) and a second end plate (420), respectively covering the front side and the rear side of the cell cover,
wherein the rupture portion is located close to the first end plate, and
the connecting portion is located close to the second end plate.

8. The battery pack of claim 5, wherein:
the plurality of cell units including the plurality of battery cells and the cell cover are mounted in the pack case facing each other, and
the rupture portions provided in the plurality of cell units facing each other are disposed to face in opposite directions.

9. The battery pack of claim 2, wherein:
the venting portion is formed by rupturing the plurality of rupturable layers caused by expansion of the rupture guide member.

10. The battery pack of claim 9, wherein:
the plurality of rupturable layers comprises a first rupturable layer (510) and a second rupturable layer (520),
the first rupturable layer is positioned opposite to one surface of the second rupturable layer, and
the other surface of the second rupturable layer is positioned opposite to the battery cell.

11. The battery pack of claim 10, wherein:
the first rupturable layer and the second rupturable layer have a stacked structure.

12. The battery pack of claim 1, wherein:
the rupture guide member comprises a shape memory alloy.

13. A device comprising the battery pack according to claim 1.

## Patentansprüche

1. Batteriepack (1000), umfassend: eine Vielzahl von Batteriezellen (100), die in einer Richtung gestapelt sind; ein Packgehäuse (600), das die Batteriezellen in einem Innenraum aufnimmt; eine Zellenabdeckung (200), die mindestens teilweise mindestens einen Teil der Vielzahl von Batteriezellen im Innenraum des Packgehäuses umschließt; und eine reißbare Folie (500), die zwischen einem oberen Abschnitt (210) der Zellenabdeckung und der Batteriezelle ausgebildet ist, wobei die reißbare Folie eine Vielzahl von reißbaren Schichten (510, 520) und ein Bruchführungselement (530), das zwischen der Vielzahl von reißbaren Schichten ausgebildet ist, umfasst, wobei das Bruchführungselement dazu konfiguriert ist, bei einer bestimmten Temperatur oder höher zu expandieren, um die Vielzahl von reißbaren Schichten zu zerreißen und zu durchtrennen.

2. Batteriepack nach Anspruch 1, wobei: die Zellenabdeckung eine Vielzahl von Löchern (215) umfasst, die beim Durchdringen eines oberen Abschnitts der Zellenabdeckung gebildet werden, und die reißbare Folie eine Vielzahl von Entlüftungsabschnitten (501) umfasst, die in einem Bereich der reißbaren Folie entsprechend dem Loch ausgebildet sind.

3. Batteriepack nach Anspruch 2, wobei: der Entlüftungsabschnitt durch eine Vielzahl von Entlüftungslöchern (550) gebildet wird, die in einem Bereich der reißbaren Folie entsprechend dem Loch in der Zellenabdeckung ausgebildet sind.

4. Batteriepack nach Anspruch 3, wobei: die Form des Entlüftungslochs gleich oder kleiner ist als die Form der Zellenabdeckung.

5. Batteriepack nach Anspruch 2, wobei: der Entlüftungsabschnitt einen Bruchabschnitt (560), der mindestens drei Ecken aufweist; und einen Verbindungsabschnitt (561), der eine mit der reißbaren Folie verbundene Ecke ist, umfasst.

6. Batteriepack nach Anspruch 5, wobei: der Bruchabschnitt entlang der Längsrichtung der reißbaren Folie ausgebildet ist, und der Verbindungsabschnitt so ausgebildet ist, dass er sich entlang der Breitenrichtung der reißbaren Folie erstreckt.

7. Batteriepack nach Anspruch 5, ferner umfassend: eine erste Endplatte (410) und eine zweite Endplatte (420), die jeweils die Vorderseite und die Rückseite der Zellenabdeckung abdecken, wobei der Bruchabschnitt nahe der ersten Endplatte angeordnet ist, und der Verbindungsabschnitt nahe der zweiten Endplatte angeordnet ist.

8. Batteriepack nach Anspruch 5, wobei: die Vielzahl von Zelleneinheiten, die die Vielzahl von Batteriezellen und die Zellenabdeckung umfassen, in dem Packgehäuse einander zugewandt montiert sind, und die in der Vielzahl von einander zugewandten Zelleneinheiten vorgesehenen Bruchabschnitte so angeordnet sind, dass sie in entgegengesetzte Richtungen weisen.

9. Batteriepack nach Anspruch 2, wobei: der Entlüftungsabschnitt durch das Zerreißen der Vielzahl von reißbaren Schichten gebildet wird, das durch die Expansion des Bruchführungselements verursacht wird.

10. Batteriepack nach Anspruch 9, wobei: die Vielzahl von reißbaren Schichten eine erste reißbare Schicht (510) und eine zweite reißbare Schicht (520) umfasst, die erste reißbare Schicht gegenüber einer Oberfläche der zweiten reißbaren Schicht positioniert ist, und die andere Oberfläche der zweiten reißbaren Schicht gegenüber der Batteriezelle positioniert ist.

11. Batteriepack nach Anspruch 10, wobei: die erste reißbare Schicht und die zweite reißbare Schicht eine gestapelte Struktur aufweisen.

12. Batteriepack nach Anspruch 1, wobei: das Bruchführungselement eine Formgedächtnislegierung umfasst.

13. Vorrichtung, umfassend den Batteriepack nach Anspruch 1.

## Revendications

1. Bloc-batterie (1000) comprenant : une pluralité de cellules de batterie (100) empilées dans une direction ; un boîtier de bloc (600) qui loge les cellules de batterie dans un espace intérieur ; un couvercle de cellule (200) qui entoure au moins partiellement au moins une partie de la pluralité de cellules de batterie dans l'espace intérieur du boîtier de bloc ; et une feuille apte à la rupture (500) formée entre une partie supérieure (210) du couvercle de cellule et la cellule de batterie, **caractérisé en ce que** la feuille apte à la rupture comprend une pluralité de couches aptes à la rupture (510, 520), et un élément de guidage de rupture (530) formé entre la pluralité de couches aptes à la rupture, dans lequel l'élément de guidage de rupture est configuré pour se dilater à une certaine température ou plus pour rompre et couper la pluralité de couches aptes à la rupture.

2. Bloc-batterie selon la revendication 1, dans lequel: le couvercle de cellule comprend une pluralité de trous (215) formés en traversant une partie supérieure du couvercle de cellule, et la feuille apte à la rupture comprend une pluralité de parties de ventilation (501) formées dans une région de la feuille apte à la rupture correspondant au trou.

3. Bloc-batterie selon la revendication 2, dans lequel: la partie de ventilation est formée par une pluralité de trous de ventilation (550) qui sont formés dans une région de la feuille apte à la rupture correspondant au trou dans le couvercle de cellule.

4. Bloc-batterie selon la revendication 3, dans lequel: la forme du trou de ventilation est identique ou plus petite que la forme du couvercle de cellule.

5. Bloc-batterie selon la revendication 2, dans lequel: la partie de ventilation comprend, une partie de rupture (560) incluant au moins trois coins ; et une partie de connexion (561) qui est un coin connecté à la feuille apte à la rupture.

6. Bloc-batterie selon la revendication 5, dans lequel: la partie de rupture est formée le long de la direction longitudinale de la feuille apte à la rupture, et la partie de connexion est formée pour s'étendre le long de la direction de la largeur de la feuille apte à la rupture.

7. Bloc-batterie selon la revendication 5, comprenant en outre : une première plaque d'extrémité (410) et une seconde plaque d'extrémité (420), recouvrant respectivement le côté avant et le côté arrière du couvercle de cellule, dans lequel la partie de rupture est située à proximité de la première plaque d'extrémité, et la partie de connexion est située à proximité de la seconde plaque d'extrémité.

8. Bloc-batterie selon la revendication 5, dans lequel: la pluralité d'unités de cellule incluant la pluralité de cellules de batterie et le couvercle de cellule sont montées dans le boîtier de bloc en se faisant face, et les parties de rupture prévues dans la pluralité d'unités de cellule se faisant face sont disposées pour faire face dans des directions opposées.

9. Bloc-batterie selon la revendication 2, dans lequel: la partie de ventilation est formée en rompant la pluralité de couches aptes à la rupture provoquée par l'expansion de l'élément de guidage de rupture.

10. Bloc-batterie selon la revendication 9, dans lequel: la pluralité de couches aptes à la rupture comprend une première couche apte à la rupture (510) et une seconde couche apte à la rupture (520), la première couche apte à la rupture est positionnée à l'opposé d'une surface de la seconde couche apte à la rupture, et l'autre surface de la seconde couche apte à la rupture est positionnée à l'opposé de la cellule de batterie.

11. Bloc-batterie selon la revendication 10, dans lequel: la première couche apte à la rupture et la seconde couche apte à la rupture ont une structure empilée.

12. Bloc-batterie selon la revendication 1, dans lequel: l'élément de guidage de rupture comprend un alliage à mémoire de forme.

13. Dispositif comprenant le bloc-batterie selon la revendication 1.
